# EUROPEAN PATENT APPLICATION

(11) **EP 4 289 884 A1**
(43) Date of publication of application: **13.12.2023**
(21) Application number: 22749708.8
(22) Date of filing: 01.02.2022
(51) Int. Cl.: C08J 3/12, B29C 33/72, B29C 48/27, C08J 9/28

(54) **POROUS PARTICLES AND PURGING AGENT**

(30) Priority: 02.02.2021 JP 2021014926
(71) Applicant: Kuraray Co., Ltd., Kurashiki-shi, Okayama 710-0801 (JP)
(72) Inventor: SUZUKI Makoto, Kurashiki-shi, Okayama 713-8550 (JP); OSHITA Mizuko, Kurashiki-shi, Okayama 713-8550 (JP)
(74) Representative: Müller-Boré & Partner Patentanwälte PartG mbB
(86) International application number: PCT/JP2022/003868
(87) International publication number: WO 2022/168836

(57) **Abstract**

A purging agent which enables efficiently discharging a resin to be purged in a molding apparatus is provided. Porous particles contain: an ethylene-vinyl alcohol copolymer (A); and an alkali metal (B), wherein a median pore diameter is 0.01 to 3 µm, an average particle diameter is 2.5 to 8 mm, and a content of the alkali metal (B) is 1,000 to 100,000 ppm.

## Description

### [TECHNICAL FIELD]

The present invention relates to porous particles and a purging agent.

### [BACKGROUND ART]

Resins superior in gas barrier properties, such as an ethylene-vinyl alcohol copolymer (hereinafter, may be also referred to as "EVOH"), are widely used in products such as films and containers for food packaging, and the like. At a time of melt-extruding the intended resin in a molding machine to obtain such a product, the resin sometimes becomes attached in a flow path (for example, to a screw) of the molding machine. If this attached resin is left alone over a long period of time, the resin may cause deterioration such as burning, gelling, decomposition, and the like, which may lead to the generation of defect(s) such as stripes, aggregates, gels, and the like, or may lead to spending extensive time to resolve the defect(s) and to loss of materials.

As a purging agent for removing the resin (hereinafter, may be referred to as "resin to be purged") attached to the screw and/or the like in the molding machine, various products have been proposed. For example, Patent Document 1 discloses a purging agent containing: a hydrophobic thermoplastic resin such as a polyolefin resin; a hydrophilic thermoplastic resin such as a saponification product of an ethylene-vinyl acetate copolymer; and water. Patent Document 2 discloses a purging agent resulting from blending, at a certain ratio: a saponification product of an ethylene-vinyl ester copolymer, or the like; and water.

### [PRIOR ART DOCUMENTS]

### [Patent Documents]

Patent Document 1: Japanese Unexamined Patent Application, Publication No. H10-16023
Patent Document 2: Japanese Unexamined Patent Application, Publication No. 2008-279623

### [SUMMARY OF THE INVENTION]

### [Problems to Be Solved by the Invention]

However, in the case of the purging agents disclosed in Patent Document 1 and Patent Document 2, it cannot be deemed that the resin to be purged, being in the molding machine, is sufficiently removed, and there is a desire for an improvement in purging capability.

The present invention was made for solving the aforementioned problems, and an object of the invention is to provide a purging agent that enables efficiently discharging the resin to be purged, being in the molding machine.

### [Means for Solving the Problems]

The foregoing problems can be solved by any of the following:
(1) Porous particles containing: an ethylene-vinyl alcohol copolymer (A); and an alkali metal (B), wherein, in the porous particles, a median pore diameter is 0.01 to 3 µm, an average particle diameter is 2.5 to 8 mm, and a content of the alkali metal (B) is 1,000 to 100,000 ppm;
(2) The porous particles according to (1), wherein a pore surface area is 25 to 60 m²/g;
(3) The porous particles according to (1) or (2), wherein the porous particles are hydrous porous particles;
(4) The porous particles according to (3), wherein a moisture content is 5 to 80% by mass;
(5) The porous particles according to any one of (1) to (4), wherein an ethylene unit content in the ethylene-vinyl alcohol copolymer (A) is 18 to 52 mol%;
(6) A purging agent containing the porous particles according to any one of (1) to (5); and
(7) The purging agent according to (6), further containing a polyolefin resin (C) at a content of 50% by mass or more.

### [Effects of the Invention]

According to the present invention, the resin to be purged, being in the molding machine, can be efficiently discharged from the molding machine. Consequently, defects in a product obtained from the molding machine, as well as a time period required for resolving the defects and/or loss of material, can be reduced.

### [DESCRIPTION OF EMBODIMENTS]

In the present specification, the term "to" which represents a numerical value range means a range which includes each lower limit value and upper limit value. For example, the term "A to B" means "A or more and B or less".

### Porous Particles

Porous particles of the present invention contain: an ethylene-vinyl alcohol copolymer (A); and an alkali metal (B), wherein, in the porous particles, a median pore diameter is 0.01 to 3 µm, an average particle diameter is 2.5 to 8 mm, and a content of the alkali metal (B) is 1,000 to 100,000 ppm.

### EVOH (A)

The EVOH (A) used in the present invention is typically obtained by saponifying an ethylene-vinyl ester copolymer. In the present invention, an ethylene unit content of the EVOH is, for example, preferably 18 mol% or more, 21 mol% or more, 24 mol% or more, or 30 mol% or more. Furthermore, the ethylene unit content of the EVOH is, for example, preferably 52 mol% or less, 49 mol% or less, or 46 mol% or less. In a case in which the ethylene unit content is 18 mol% or more, a deterioration risk of the EVOH itself at a time of performing purging may be decreased, and a melting point may decrease, whereby an extrusion temperature can be set to a relatively low temperature. In a case in which the ethylene unit content is 52 mol% or less, a viscosity of the molten resin (EVOH) may increase, whereby removal of the resin to be purged tends to be facilitated. The ethylene unit content of the EVOH can be measured by, for example, a nuclear magnetic resonance (NMR) procedure.

In the present invention, a degree of saponification of the EVOH (i.e., a degree of saponification of the vinyl ester component of the EVOH) is, for example, preferably 95 mol% or more, more preferably 98% or more, and still more preferably 99 mol% or more. On the other hand, the degree of saponification of the EVOH is, for example, preferably 100% or less, and may be 99.99% or less. The degree of saponification of the EVOH can be determined by measuring, by means of ¹H-NMR measurement: a peak area of hydrogen atoms contained in the vinyl ester structure; and a peak area of hydrogen atoms contained in the vinyl alcohol structure.

The EVOH may have, within a range not impairing the object of the present invention, unit(s) derived from other monomer(s) aside from ethylene, vinyl ester, and saponification products thereof. In the case in which the EVOH has the unit(s) derived from the other monomer(s), the upper limit of a content of the unit(s) derived from the other monomer(s) with respect to total structural units in the EVOH is, for example, 30 mol% or less, 20 mol% or less, 10 mol% or less, or 5 mol% or less. In the case in which the EVOH has the unit(s) derived from the other monomer(s), a content thereof is, for example, preferably 0.05 mol% or more and more preferably 0.1 mol% or more.

Examples of the other monomer include: alkenes such as propylene, butylene, pentene, and hexene; ester group-containing alkenes such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane or saponification products thereof; unsaturated acids such as acrylic acid, methacrylic acid, crotonic acid, and itaconic acid, or anhydrides, salts, mono- or dialkyl esters, or the like thereof; nitriles such as acrylonitrile and methacrylonitrile; amides such as acrylamide and methacrylamide; olefin sulfonic acids such as vinylsulfonic acid, allylsulfonic acid, and methallylsulfonic acid, or salts thereof; vinylsilane compounds such as vinyltrimethoxysilane, vinyltriethoxysilane, vinyltri(β-methoxy-ethoxy)silane, and γ-methacryloxypropylmethoxysilane; alkyl vinyl ethers; vinyl ketones; N-vinylpyrrolidone; vinyl chloride; vinylidene chloride; and the like.

The EVOH may be modified by urethanization, acetalization, cyanoethylation, oxyalkylenation, or the like. In the case in which the modified EVOH is used as a purging agent, compatibility may improve with respect to a resin to be purged which consists of a urethane, acetal, or acrylonitrile resin, whereby the purging can be performed more efficiently.

As the EVOH, two or more types of EVOHs which differ in the ethylene unit content, the degree of saponification, the copolymer components, the presence or absence of modification, the type of modification, and/or the like may be combined and used.

The EVOH may be obtained by a well-known procedure such as a bulk polymerization procedure, a solution polymerization procedure, a suspension polymerization procedure, or an emulsion polymerization procedure. In one embodiment, a bulk polymerization procedure or a solution polymerization procedure, which respectively allow polymerization to proceed without a solvent or in a solution such as an alcohol, is employed.

The solvent to be used in the solution polymerization procedure is not particularly limited, and is, for example, an alcohol, and preferably a lower alcohol such as methanol, ethanol, or propanol. A usage amount of the solvent in the polymerization reaction liquid may be selected based on, e.g., a viscosity-average degree of polymerization of the intended EVOH and/or a chain transfer of the solvent, and a mass ratio (solvent/total monomers) of the solvent to total monomers contained in the reaction liquid is, for example, 0.01 to 10, and preferably 0.05 to 3.

Examples of a catalyst to be used in the polymerization include: azo initiators such as 2,2-azobisisobutyronitrile, 2,2-azobis-(2,4-dimethylvaleronitrile), 2,2-azobis-(4-methoxy-2,4-dimethylvaleronitrile), and 2,2-azobis-(2-cyclopropylpropionitrile); organic peroxide initiators such as isobutyryl peroxide, cumyl peroxyneodecanoate, diisopropyl peroxycarbonate, di-n-propyl peroxydicarbonate, t-butyl peroxyneodecanoate, lauroyl peroxide, benzoyl peroxide, and t-butyl hydroperoxide; and the like.

A polymerization temperature is preferably 20 °C to 90 °C, and more preferably 40 °C to 70 °C. A time period of the polymerization is preferably 2 hrs to 15 hrs, and more preferably 3 hrs to 11 hrs. A rate of the polymerization (conversion) is, with respect to the vinyl ester charged, preferably 10% to 90%, and more preferably 30% to 80%. A percentage content of resin in a solution after the polymerization is preferably 5% to 85%, and more preferably 20% to 70%.

In the polymerization, after performing the polymerization for a certain time period or after reaching a certain rate of polymerization, a polymerization inhibitor is added as needed, and unreacted ethylene gas is eliminated by evaporation, and then an unreacted vinyl ester is eliminated to give the EVOH.

Next, an alkali catalyst is added to the copolymer solution to allow for saponification of the copolymer. A saponification procedure may be, for example, either of a continuous system or a batchwise system. Examples of alkali catalysts which may be added include sodium hydroxide, potassium hydroxide, alkali metal alcoholate, and the like.

Since the EVOH after the saponification reaction typically contains impurities, these are preferably removed as needed by neutralization and/or washing.

The lower limit of a content of the EVOH (A) in a dry state of the porous particles of the present invention is preferably 80% by mass, and may be more preferably 90% by mass, 92% by mass, or 95% by mass. The upper limit of this content is preferably 99.9% by mass. The content in a dry state is equivalent to a content based on all components other than water.

### Alkali Metal (B)

A form of the alkali metal (B) contained in the porous particles of the present invention is not particularly limited, and for example, may be present as a salt, a compound other than a salt, or the like, and the alkali metal (B) is preferably present in the form of a salt. In the case of being present in the form of a salt, the alkali metal (B) may be free as an alkali metal ion, or may be bonded to a counterion. In the porous particles of the present invention, the element of the alkali metal (B) may be contained in a range of 1,000 to 100,000 ppm. Examples of the alkali metal include lithium, sodium, potassium, rubidium, cesium, and the like, and sodium and potassium are preferred in light of superiority in reactivity with the resin to be purged, being in the molding machine. Examples of a counterion of the salt include a carbonic acid ion, a bicarbonate ion, a carboxylic acid ion, a hydroxide ion, and the like, and of these, anions of weak acids such as the carbonic acid ion, the bicarbonate ion, and the carboxylic acid ion are preferred. In the case in which the alkali metal (B) forms a salt with a weak acid (the case of the alkali metal salt of a weak acid), an alkaline aqueous solution tends to be generated in the presence of water in the flow path of the extruder, whereby the resin to be purged can be particularly efficiently removed.

A content of the alkali metal (B) in terms of alkali metal element equivalent is 1,000 ppm or more, preferably 2,500 ppm or more, more preferably 5,000 ppm or more, still more preferably 10,000 ppm or more, and may be yet more preferably 12,000 ppm, 14,000 ppm or more, or 15,000 ppm or more. When the content of the alkali metal (B) is less than 1,000 ppm, reactivity as a purging agent may deteriorate. Furthermore, the content of the alkali metal (B) is 100,000 ppm or less, preferably 75,000 ppm or less, more preferably 50,000 ppm or less, and may be still more preferably 25,000 ppm or less or 20,000 ppm or less. When the content of the alkali metal (B) is more than 100,000 ppm, the flow path of the resin present in the molding machine may be caused to corrode.

### Other Additive(s)

The porous particles of the present invention may contain, within a range not impairing the effects of the present invention, other additive(s) aside from the EVOH (A) and the alkali metal (B) (the component containing the alkali metal element). The other additive(s) may be exemplified by metal salts other than alkali metal salts, acids, boron compounds, lubricants, colorants, ultraviolet ray absorbers, desiccants, crosslinking agents, abrasives, fillers, heat stabilizers, processing aids, antiblocking agents, antistatic agents, coupling agents, antioxidants, lubricants, foaming agents, surfactants, plasticizers, and combinations thereof. In particular, abrasives are used to discharge the resin to be purged, being in the molding machine, by means of a physical grinding action, and examples thereof include those constituted from inorganic compounds such as alumina, zirconia, silica, titanium dioxide, calcium and carbide.

### Form, Etc.

A median pore diameter of the porous particles of the present invention, measured by a mercury intrusion procedure, is 0.01 to 3 µm. The median pore diameter of the porous particles is a value of pores in a range of 0.005 to 100 µm, and specifically is a value measured by a method disclosed in EXAMPLES, described later. When the median pore diameter is less than 0.01 µm, absorption of moisture may become slower, whereby producibility may deteriorate. The lower limit of the median pore diameter is preferably 0.03 µm, more preferably 0.05 µm, and still more preferably 0.06 µm. Furthermore, when the median pore diameter is more than 3 µm, dehydration may proceed too quickly, whereby it may not be possible to maintain the moisture in the porous particles. Furthermore, when the median pore diameter is more than 3 µm, strength of the porous particles may deteriorate, whereby handleability may deteriorate and there may be a tendency for the fine powder or pellets to be likely to chip in the final product. The upper limit of this median pore diameter is preferably 2 µm, more preferably 1 µm, and still more preferably 0.5 µm, 0.3 µm, 0.2 µm, or 0.15 µm.

A pore surface area of the porous particles of the present invention is preferably 25 to 60 m²/g. The pore surface area of the porous particles falling within the above range is preferred in light of, e.g., the alkali metal (B) being appropriately adsorbed. The pore surface area of the porous particles is measured by a mercury intrusion procedure. The pore surface area of the porous particles is a value of pores in a range of 0.005 to 100 µm, and specifically is a value measured by a method disclosed in EXAMPLES, described later. In a case in which the pore surface area of the porous particles is 25 m²/g or more, the content of the alkali metal (B) and the moisture content of the porous particles can be sufficiently increased, and the like. In a case in which the pore surface area is less than 60 m²/g, strength of the porous particles may increase, whereby handleability may improve and there may be a tendency for the fine powder or pellets to be unlikely to chip in the final product. The upper limit of the pore surface area is more preferably 45 m²/g.

A procedure of adjusting the median pore diameter and the pore surface area of the porous particles of the present invention may be exemplified by a procedure of adjusting a moisture percentage, an alcohol content, and an extrusion temperature of an EVOH paste when producing hydrous EVOH pellets. It is to be noted that in a case of obtaining the hydrous EVOH pellets by depositing in a strand form, the adjustment may also be performed by means of an EVOH solution concentration, a temperature and alcohol concentration of the deposition bath, a washing temperature of the hydrous EVOH pellets obtained, and the like.

The average particle diameter of the porous particles of the present invention is 2.5 to 8 mm. When the average particle diameter is less than 2.5 mm, separation from other resin(s) may occur at the time of introduction into an extrusion processing machine. The lower limit of this average particle diameter may be preferably 3.0 mm. Furthermore, when the average particle diameter is more than 8 mm, feeding into the hopper at the time of introduction into the extrusion processing machine may deteriorate. The upper limit of this average particle diameter may be preferably 7 mm, 6 mm, 5 mm, or 4.0 mm. The average particle diameter of the porous particles is a median diameter based on a cumulative particle size distribution on a volume basis, and is a value measured by a method described in

### EXAMPLES.

The porous particles of the present invention are preferably hydrous porous particles. When the porous particles contain water, they become an alkali solution in the flow path of the extruder, whereby the resin to be purged can be efficiently removed. A moisture content of the hydrous porous particles is preferably 5% by mass or more, more preferably 10% by mass or more, and still more preferably 15% by mass or more. In the case in which the moisture content is 5% by mass or more, the alkali solution can be exhibited in a sufficient amount in the flow path of the extruder. Furthermore, the moisture content of the hydrous porous particles is preferably 80% by mass or less, more preferably 70% by mass or less, and still more preferably 60% by mass or less. In the case in which the moisture content is 80% by mass or less, a decrease in a concentration of the alkali solution can be inhibited.

### Purging Agent

The purging agent of the present invention contains the porous particles of the present invention. A content of the porous particles in the purging agent of the present invention may be, for example, 1% by mass or more and 100% by mass or less, may be 2% by mass or more and 50% by mass or less, or may be 3% by mass or more and 30% by mass or less.

In order to improve worker safety and extrusion properties, the purging agent of the present invention may further contain a polyolefin resin (C). The polyolefin resin (C) may be exemplified by polyethylenes (a high-density polyethylene (HDPE), a low-density polyethylene (LDPE), a linear low-density polyethylene (LLDPE), a very low-density polyethylene (VLDPE), etc.), homopropylene, random polypropylene, block polypropylene, an ethylene-vinyl acetate copolymer, an ethylene-(meth)acrylic acid ester copolymer, and the like, as well as copolymers and modification products thereof. Of these, the polyethylenes are preferred, and the high-density polyethylene is particularly preferred. The polyolefin resin (C) is typically in particle form. More specifically, one mode of the purging agent of the present invention is mixed particles of the porous particles and particles of the polyolefin resin (C).

A content of the polyolefin resin (C) with respect to a mass of the purging agent in an entirety is preferably 50% by mass or more, more preferably 60% by mass or more, and still more preferably 70% by mass or more. In the case in which the content of the polyolefin resin (C) with respect to the mass of the purging agent in the entirety is 50% by mass or more, jamming defects may improve, whereby discharge tends to be favorable. The upper limit of the content of the polyolefin resin (C) in the purging agent may be 99% by mass, or may be 95% by mass. Furthermore, a total content of the porous particles and the polyolefin resin (C) in the purging agent is preferably 90% by mass or more and 100% by mass or less, and more preferably 95% by mass or more and 99% by mass or more.

The purging agent of the present invention can be used as a purging agent for various resins which are subject to melt molding. The purging can be performed by charging the purging agent into a molding machine having, in a flow path, the resin to be purged attached, and then performing melt extrusion. The resin to be purged is not particularly limited as long as it is a thermoplastic resin, and is preferably a thermoplastic resin having a polar group (PMMA, PLA, ABS, AS, PVC, PVDF, TPU, PC, PBT, POM, PA, EVOH, adhesive resins, etc.), and any mixture thereof can also be effectively used as the resin to be purged. Of these, the resin to be purged is particularly preferably an EVOH.

### [EXAMPLES]

Hereinafter, the present invention is specifically described by way of Examples and the like, but the present invention is not limited to these Examples. It is to be noted that methods for measurement, calculation, and evaluation were each performed in accordance with the following methods.

### Evaluation Methods

### (1) Measurement of Ethylene Unit Content and Degree of Saponification

Porous particles obtained in each of Examples and Comparative Examples were dissolved in DMSO-d₆ and measured using ¹H-NMR ("JNM-GX-500" model manufactured by JEOL, Ltd.) to determine the ethylene unit content and the degree of saponification.

### (2) Measurement of Pore Surface Area and Median Pore Diameter

The porous particles obtained in each of the Examples and the Comparative Examples were frozen at -80 °C, and then were freeze-dried and adopted as a sample material for pore measurement. About 0.5 g of each sample material for measurement was put into a standard 5 cc cell for powder (stem volume: 0.4 cc), and measurements were performed using a micromeritics pore distribution measurement apparatus (AutoPore V9620, manufactured by Shimadzu Corporation) under a condition involving an initial pressure of 2.6 kPa. Mercury parameters were set to a mercury contact angle of 130 degrees, and a mercury surface tension of 485 dynes/cm. The pore surface area and the median pore diameter were calculated for pores in a range of 0.005 to 100 µm.

### (3) Measurement of Average Particle Diameter

"CAMSIZER XT", manufactured by Verder Scientific, was used to calculate a circle-equivalent particle diameter of 100 g of the free-dried sample materials for pore measurement (porous particles) by a dynamic image analysis method in accordance with ISO 13322-2 (2006), and a particle diameter (Q3 50.0%) at which a cumulative particle distribution of the circle-equivalent particle diameter from a small particle diameter side was 50% (volume basis) was adopted as the average particle diameter.

### (4) Measurement of Moisture Content

A moisture content of the porous particles was measured by using 3 g of the porous particles obtained in each of the Examples and the Comparative Examples under conditions involving a drying temperature of 180 °C and a drying time period of 15 min with "HR73", a halogen moisture analyzer manufactured by Mettler Toledo.

### (5) Quantitative Determination of Alkali Metal (B)

The porous particles obtained in each of the Examples and the Comparative Examples were placed in an amount of 0.5 g into a Teflon (registered trademark) pressure vessel and thereto, 5 mL of concentrated nitric acid was added and decomposition was permitted at room temperature for 30 min. Thirty minutes later, a lid was attached and decomposition was allowed by heating using a wet decomposition system ("MWS-2" manufactured by Actac Project Services Corporation) at 150 °C for 10 min and then at 180 °C for 5 min, followed by cooling to room temperature. This treatment liquid was transferred to a 50 mL volumetric flask (made of TPX (registered trademark)) and diluted with pure water until the volumetric flask was full. This solution was subjected to an analysis on metals contained therein with an ICP emission spectrometer ("OPTIMA 4300 DV" manufactured by PerkinElmer, Inc.) to calculate the amount of metal (elements). It is to be noted that in each quantitative determination, a calibration curve created using a commercially available standard solution was used.

### (6) Purging Evaluation (Amount of Attachment to Screws)

As the resin to be purged, an EVOH (F 101, manufactured by Kuraray Co., Ltd.) was passed for 10 min through a twin-screw extruder ("2D 25W", manufactured by Toyo Seiki Seisaku-sho; L/D: 25) to deposit the resin to be purged in the extruder. Rotation of the screws was stopped and the resin to be purged was left to stand for 30 min, and then a high-density polyethylene ("HI-ZEX 7000F", manufactured by Prime Polymer Co., Ltd.) was passed inside the extruder for 5 min and the die was removed. Thereafter, a cylinder was heated to 290 °C to allow air to flow in and heating was performed for 3 hrs with a screw rotation speed of 10 rpm to allow for oxidative degradation of the resin to be purged.

Next, the purging agent obtained in each of the Examples and the Comparative Examples was supplied from a hopper of the extruder for 40 min at a purging temperature of 190 °C, a screw rotation speed of 100 rpm, and an extrusion amount of 3.2 (kg/hr), then low-density polyethylene ("LC-600A", manufactured by Japan Polyethylene Corporation) was passed through for 3 min, followed by passing through low-density polyethylene ("LC-600A", manufactured by Japan Polyethylene Corporation) for 10 min while heating the cylinder until reaching 220 °C. Subsequently, high-density polyethylene ("HI-ZEX 7000F", manufactured by Prime Polymer Co., Ltd.) was passed through for 5 min.

In each of the Examples and the Comparative Examples, after the purging, the die was released, the twin screws were removed, and the resin to be purged, being attached to the screws, was collected using a copper spatula. The mass of the resin purged, thus collected, was measured.

### Example 1

An EVOH solution containing: 100 parts by mass of an EVOH having an ethylene unit content of 32 mol% and a degree of saponification of 99.98 mol%; 60 parts by mass of methanol; and 40 parts by mass of water was continuously supplied from a top plate of a plate tower having a tower diameter of 0.3 m and 10 plates, and water vapor was blown from a bottom plate thereof, thereby bringing the EVOH solution and the water vapor into contact by a countercurrent flow. A temperature in the tower was 130 °C and a temperature in the tower was 0.3 MPa. Hydrous EVOH pellets obtained by allowing the contact with the water vapor by the countercurrent flow were ejected from a tower bottom. The hydrous EVOH pellets thus obtained were fed into a twin-screw extruder at 42 kg/hr and extruded from a die which was installed on a tip of the extruder and had 8 pores each having a pore diameter of 30 mm, and a melted product thereof was, when at a distance of 0.05 mm from the die, cut with a hot cutter having 2 blades to give hydrous EVOH pellets having a flat spherical shape.

### Conditions of Twin-Screw Extruder

L/D: 14
opening diameter: 30 mm
screws: full-flight
rotation speed: 300 rpm
cylinder temperature: 90 °C
die temperature: 120 °C
number of die holes: 8

An operation in which 3 kg of the hydrous EVOH pellets thus obtained were washed with ion exchange water (bath ratio 20) while stirring at 50 °C for 1 hour and deliquored was performed twice. Subsequently, an operation in which the hydrous EVOH pellets after the washing were charged into 1 g/L of an aqueous acetic acid solution (bath ratio 20) and washed and deliquored while stirring at 25 °C for 2 hrs was performed twice. Further, an operation in which the hydrous EVOH pellets after the washing were charged into ion exchange water (bath ratio 20) and washed and deliquored while stirring at 25 °C for 2 hrs was performed twice, and an electrical conductivity of the washing liquid was measured by using "CM-30ET", an electrical conductivity measurement apparatus manufactured by DKK-TOA Corporation. Since the electrical conductivity of the washing liquid was 10 µS/cm, a third washing was performed by the same operation. Since the conductivity of the washing water was 3 µS/cm or less when measuring the electrical conductivity of the washing liquid after the third washing, the washing was stopped.

The hydrous EVOH pellets after the washing were charged into an alkaline aqueous solution having a potassium carbonate concentration of 1.0 mol/L, and immersed for 2 hrs while regularly stirring to perform a chemical treatment. The hydrous EVOH pellets after the chemical treatment were deliquored and then dried under reduced pressure at 60 °C for 5 hrs to give porous pellets having a moisture content of 24% by mass.

The porous particles thus obtained at a content of 5% by mass and particles of high-density polyethylene ("HB111R", manufactured by Japan Polyethylene Corporation) at a content of 90% by mass were kneaded (dry blended) using a blender to give a purging agent consisting of a mixture of each of the particles.

Measurements and evaluations of the Evaluation Methods (1) to (6) were performed on the porous particles and purging agent thus obtained. The results are shown in Table 1.

### Example 2

Porous particles and a purging agent were produced by a similar procedure to that of Example 1, except for the moisture content being adjusted by changing the drying time period of the hydrous EVOH pellets deliquored after the chemical treatment, and measurements and evaluations were performed. The results are shown in Table 1.

### Example 3

, Porous particles and a purging agent were produced by a similar procedure to that of Example 1, except for an aqueous sodium carbonate solution being used instead of the aqueous potassium carbonate solution as the alkaline aqueous solution, and measurements and evaluations were performed. The results are shown in Table 1.

### Example 4

Porous particles and a purging agent were produced by a similar procedure to that of Example 1, except for the concentration of the alkaline aqueous solution being changed from 1.0 mol/L to 0.8 mol/L, and measurements and evaluations were performed. The results are shown in Table 1.

### Example 5

Porous particles and a purging agent were produced by a similar procedure to that of Example 1, except for the concentration of the alkaline aqueous solution being changed from 1.0 mol/L to 1.2 mol/L, and measurements and evaluations were performed. The results are shown in Table 1.

### Example 6

Porous particles and a purging agent were produced by a similar procedure to that of Example 1, except for the ethylene unit content of the EVOH being changed to 27 mol%, and measurements and evaluations were performed. The results are shown in Table 1.

### Example 7

Porous particles and a purging agent were produced by a similar procedure to that of Example 1, except for the ethylene unit content of the EVOH being changed to 44 mol%, and measurements and evaluations were performed. The results are shown in Table 1.

### Example 8

An EVOH solution at 60 °C containing: 100 parts by mass of an EVOH having an ethylene unit content of 32 mol% and a degree of saponification of 99.98 mol%; 60 parts by mass of methanol; and 40 parts by mass of water was extruded in a strand shape from a metal plate having a circular opening portion with a diameter of 3.5 mm into a mixed solution of water and ethanol maintained at 2 °C (mass ratio: water/methanol = 9/1) to permit depositing and coagulation, and then cut with a cutter to give EVOH pellets. The EVOH pellets thus obtained were charged into water at 10 °C and stirred for 4 hrs to give hydrous EVOH pellets. Washing and chemical treatment were performed as in Example 1 using the hydrous EVOH pellets thus obtained to give porous pellets. A purging agent was produced by the same procedure as that of Example 1 using the porous pellets thus obtained. The porous pellets and the purging agent obtained were measured and evaluated as in Example 1. The results are shown in Table 1.

### Comparative Example 1

Except for the concentration of the alkaline aqueous solution being changed from 1.0 mol/L to 0.1 mol/L, porous particles and a purging agent were produced by a similar procedure to that of Example 1, and measurements and evaluations were performed. The results are shown in Table 1.

### Comparative Example 2

An EVOH solution at 60 °C containing: 100 parts by mass of an EVOH having an ethylene unit content of 32 mol% and a degree of saponification of 99.98 mol%; 60 parts by mass of methanol; and 40 parts by mass of water was extruded in a strand shape from a metal plate having a circular opening portion with a diameter of 3.5 mm into a mixed solution of water and ethanol maintained at 5 °C (mass ratio: water/methanol = 9/1) to permit depositing and coagulation, and then cut with a cutter to give EVOH pellets. The EVOH pellets thus obtained were charged into warm water at 30 °C and stirred for 4 hrs to give hydrous EVOH pellets. Washing and chemical treatment were performed as in Example 1 using the hydrous EVOH pellets thus obtained to give porous pellets. The porous pellets thus obtained were confirmed to be partially chipped, and fragments generated by the chipping were floating in the washing liquid. A purging agent was produced by the same procedure as that of Example 1 using the porous pellets thus obtained. The porous pellets and the purging agent obtained were measured and evaluated as in Example 1. The results are shown in Table 1.

### Comparative Example 3

Instead of the hydrous EVOH pellets produced having the flat spherical shape, EVOH pellets of an available product (EVAL H171 (manufactured by Kuraray Co., Ltd.) were used, and these EVOH pellets were subjected to washing and chemical treatment as in Example 1 to produce porous pellets. A purging agent was produced by the same procedure as that of Example 1 using the porous pellets thus obtained. The porous pellets and the purging agent obtained were measured and evaluated as in Example 1. The results are shown in Table 1.

**Table 1**

| | | | | Example 1 | Example 2 | Example 3 | Example 4 | Example 5 | Example 6 | Example 7 | Example 8 | Comparativ e Example 1 | Comparativ e Example 2 | Comparativ e Example 3 |
|---|---|---|---|---|---|---|---|---|---|---|---|---|---|---|
| Porous particles | EVOH (A) | Ethylene unit content | mol% | 32 | 32 | 32 | 32 | 32 | 27 | 44 | 32 | 32 | 32 | 38 |
| | Alkali metal (B) | Type | - | K | K | Na | K | K | K | K | K | K | K | K |
| | | Content | ppm | 14,000 | 14,000 | 15,000 | 13,000 | 21,000 | 11,000 | 21,000 | 15,000 | 400 | 600 | 200 |
| | Pore surface area | | m²/g | 35.8 | 35.8 | 35.8 | 35.8 | 35.8 | 32.0 | 33.0 | 55.0 | 35.8 | 28.4 | 7.3 |
| | Median pore diameter | | µm | 0.110 | 0.110 | 0.110 | 0.110 | 0.110 | 0.110 | 0.070 | 0.052 | 0.110 | 4.0 | 0.011 |
| | Average particle diameter | | mm | 3.2 | 3.2 | 3.2 | 3.2 | 3.2 | 3.2 | 3.2 | 4.1 | 3.2 | 4.2 | 3.5 |
| | Moisture content | | %by mass | 24 | 15 | 23 | 24 | 24 | 26 | 22 | 29 | 24 | 24 | 6 |
| Polyolefin resin (C) | | Type | - | HDPE | HDPE | HDPE | HDPE | HDPE | HDPE | HDPE | HDPE | HDPE | HDPE | HDPE |
| | | Content | %by mass | 90 | 90 | 90 | 90 | 90 | 90 | 90 | 90 | 90 | 90 | 90 |
| Evaluation | | Attachment to screws | g | 1.2 | 1.1 | 1.3 | 1.5 | 0.9 | 1.6 | 0.9 | 1.6 | 4.1 | 2.9 | 3.7 |

As shown in Table 1, in the case of performing purging using each of the purging agents obtained in Examples 1 to 8, the amount of remaining resin to be purged attached to the screws was low, revealing that the resin to be purged, being in the molding machine, can be efficiently discharged from the molding machine.

## Claims

1. Porous particles comprising: an ethylene-vinyl alcohol copolymer (A); and an alkali metal (B),
wherein
a median pore diameter is 0.01 to 3 µm,
an average particle diameter is 2.5 to 8 mm, and
a content of the alkali metal (B) is 1,000 to 100,000 ppm.

2. The porous particles according to claim 1, wherein a pore surface area is 25 to 60 m²/g.

3. The porous particles according to claim 1 or 2, wherein the porous particles are hydrous porous particles.

4. The porous particles according to claim 3, wherein a moisture content is 5 to 80% by mass.

5. The porous particles according to any one of claims 1 to 4, wherein an ethylene unit content in the ethylene-vinyl alcohol copolymer (A) is 18 to 52 mol%.

6. A purging agent comprising the porous particles according to any one of claims 1 to 5.

7. The purging agent according to claim 6, further comprising a polyolefin resin (C) at a content of 50% by mass or more.
